(19) Europäisches Patentamt / European Patent Office / Office européen des brevets

(11) **EP 4 214 415 B1**

(12) **EUROPEAN PATENT SPECIFICATION**

(45) Date of publication and mention of the grant of the patent:
**27.05.2026 Bulletin 2026/22**

(21) Application number: **21867966.0**

(22) Date of filing: **21.09.2021**

(51) International Patent Classification (IPC):
**F03G 6/02** *(2006.01)*    **F03G 6/00** *(2006.01)*
**F24S 10/00** *(2018.01)*    **F24S 60/00** *(2018.01)*

(52) Cooperative Patent Classification (CPC):
**F03G 6/02; F03G 6/071; F24S 10/00; F24S 60/00; Y02E 10/46**

(86) International application number:
**PCT/AU2021/051099**

(87) International publication number:
**WO 2022/056609 (24.03.2022 Gazette 2022/12)**

(54) **SOLAR POWER SYSTEM**

SOLARENERGIESYSTEM

SYSTÈME D'ÉNERGIE SOLAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2020   AU 2020903384**
**20.11.2020   AU 2020904303**

(43) Date of publication of application:
**26.07.2023 Bulletin 2023/30**

(73) Proprietor: **Equilibrium Energy Pty Ltd**
**Waterloo Corner, SA 5110 (AU)**

(72) Inventor: **PAPADOPOULOS, Thomas**
**Waterloo Corner, South Australia 5110 (AU)**

(74) Representative: **Jilderda, Anne Ayolt**
**LIOC Patents & Trademarks**
**Zwaanstraat 31 L**
**5651 CA Eindhoven (NL)**

(56) References cited:
| | |
|---|---|
| WO-A1-2009/049488 | WO-A1-2016/151197 |
| WO-A1-93/15317 | AU-B2- 2008 201 486 |
| DE-C- 490 931 | RU-C1- 2 725 306 |
| US-A- 4 173 123 | US-A- 4 441 318 |
| US-A1- 2007 163 260 | US-A1- 2015 247 489 |
| US-A1- 2019 329 427 | US-B2- 9 664 180 |

**Description**

TECHNICAL FIELD

The present invention relates to solar energy, and in particular to solar power systems.

BACKGROUND ART

Fossil fuels have long been used as a source of energy. A problem, however, with fossil fuels is that they are not sustainable, release greenhouse gases, and are generally bad for the environment. They are also increasing in cost, partly due to supply decreasing and demand increasing, but also because taxes are being placed on fossil fuels.

Solar energy is a source of renewable energy that is particularly interesting due to its ubiquity and abundance. Initially, solar energy was used for solar heating, where heat is collected by absorption of sunlight. More recently, photovoltaics (PV) have been used where light is converted into electricity using semiconducting materials, which can be used to run machines, for example.

A problem with solar energy systems of the prior art is that they are generally relatively costly and complex, particularly if the solar energy is to be used for work (e.g. to drive a motor). As an illustrative example, solar PV systems require expensive panels to capture the solar energy, which is converted into electricity, and then later converted to work using an electric motor or the like.

Similarly, heat-based solar power systems generally concentrate sunlight using mirrors or lenses and generally rely on high temperatures and/or high temperature differentials. As an illustrative example, Rankine cycle generators generally require the fluid to be heated several hundred degrees. This requires very high levels of thermal insulation and specialised equipment, which is costly, and as a result, such systems are rarely cost effective. An example of such a system is disclosed in US4441318A.

As such, there is clearly a need for improved solar power systems.

It will be clearly understood that, if a prior art publication is referred to herein, this reference does not constitute an admission that the publication forms part of the common general knowledge in the art in Australia or in any other country.

SUMMARY OF INVENTION

The present invention is directed to solar power methods and systems which may at least partially overcome at least one of the abovementioned disadvantages or provide the consumer with a useful or commercial choice.

With the foregoing in view, the present invention in one form, resides broadly in a solar power system comprising:

a plurality of pressure vessels configured to receive working fluid;
a solar collector, configured to heat the working fluid in at least one of the pressure vessels to thereby cause the working fluid to expand in the pressure vessel without changing phase; and
a mechanical work element, configured to perform work from expansion of the working fluid in the pressure vessels, wherein at least some of the plurality of pressure vessels are selectively couplable to each other to enable transfer of residual pressure energy from one pressure vessel after it has been used to perform work to another pressure vessel to assist in performing work.

Advantageously, as the system does not rely in a change in phase in the working fluid it is able to function at low temperatures and low temperature differentials. This in turn enables a simple and cost-effective system to be provided.

Preferably, the residual pressure energy includes thermal energy. The pressure vessels may be thermally couplable to enable the selective transfer of thermal energy from one pressure vessel to another pressure vessel.

Preferably, the residual pressure energy includes potential energy. The pressure vessels may be hydraulically couplable to enable the selective transfer of pressure from one pressure vessel to another pressure vessel.

The pressure may be generated at least in part from thermal expansion. The pressure may be generated at least in part according to load from the mechanical work element.

Preferably, the working fluid is liquid, or substantially liquid. The working fluid may comprise silicone fluid.

Preferably, the mechanical work element is coupled to the plurality of pressure vessels to perform work from expansion of the working fluid in the pressure vessels in a pre-defined work sequence. The pre-defined work sequence may be repeated.

Preferably, the plurality of pressure vessels are coupled to each other to enable transfer residual energy between pressure vessels in a pre-defined transfer sequence.

The work sequence and the transfer sequence may operate in parallel.

The work sequence and the transfer sequence may be defined by the opening and closing of valves. The work sequence may be at least partly defined by the opening and closing of valves between the pressure vessels and the work element. The transfer sequence may be at least partly defined by the opening and closing of valves between pressure vessels.

The pressure vessels may be arranged in a circular arrangement. The work sequence may be at least partly defined by rotation of the pressure vessels.

One or more thermal reservoirs may be between pressure vessels to enable thermal transfer between pressure vessels. The pressure vessels may be rotatable relative to the thermal reservoirs to enable the thermal reservoirs to selectively couple pressure vessels according to their rotational position.

Heated working fluid may be received in a pressure vessel container, which surrounds at least one of the pressure vessels, to thereby heat the at least one pressure vessel.

A position of the pressure vessels may be configurable relative to the heated working fluid to enable different pressure vessels to be heated by the heated working fluid at different points of time.

Preferably, the solar collector is configured to heat working fluid in a first pressure vessel of the plurality of pressure vessels, to cause the working fluid to expand in the first pressure vessel, wherein heated working fluid from the first pressure vessel is subsequently configured to heat working fluid in a second pressure vessel to thereby cause the working fluid to expand in the second pressure vessel.

The system may be configured to heat the working fluid by about 10-150°C. The system may be configured to heat the working fluid by about 20-60°C. The system may be configured to heat the working fluid by about 20-30°C.

The pressure vessels may include an input, for receiving cold working fluid, and an output, for discharging warm working fluid. In this context, the terms warm and cold are used in a relative sense, and the cold working fluid being colder than the warm working fluid.

The system may be configured to discharge warm working fluid and replace it with cold working fluid. As such, the system is able to restart work without having to wait for the warm working fluid to cool, let alone time the cooling of the working fluid to any operation of the system.

The system may be configured to repeatedly receive cold working fluid and discharge warm working fluid. Preferably, the system is configured to cool the discharged warm working fluid, outside of the pressure vessel, for subsequent reuse.

Preferably, the system includes a working fluid reservoir, configured to receive working fluid for reuse. A heat sink may be coupled to the working fluid reservoir, to facilitate cooling of the working fluid therein.

Preferably, the mechanical work element comprises a piston. The piston may comprise a piston configured to directly perform work. Alternatively, the piston may be configured to indirectly perform work.

Alternatively or additionally, the mechanical work element may comprise a hydraulic motor. The hydraulic motor may be configured to rotate upon expansion of the working fluid. The hydraulic motor may be coupled to a generator, and thereby configured to generate electricity.

The mechanical work element may be coupled to each of the pressure vessels and be configured to perform mechanical work from expansion of the working fluid in any one or more of the plurality of pressure vessels.

The pressure vessels may be coupled to a single hydraulic line and thereby to the mechanical work element. The hydraulic line may include a hydraulic accumulator to function as a pressure storage reservoir and to smoothen sporadic displacement.

At least some of the pressure vessels may be configured to operate sequentially to provide a more consistent displacement on the hydraulic line. At least some of the pressure vessels may be configured to operate in parallel to provide greater hydraulic throughput.

The pressure vessel may be located in a heat reservoir, wherein the solar collector is configured to heat the working fluid in the pressure vessel by heating the heat reservoir. The heat reservoir may include a heating fluid, such as water or oil.

The system may include a plurality of first and second pressure vessels.

The first pressure vessel(s) may be coupled to a first mechanical work element (e.g. a hydraulic motor) and the second pressure vessel(s) may be coupled to a second mechanical work element (e.g. another hydraulic motor). Alternatively, the first and second pressure vessels may be coupled to a single mechanical work element.

The heated working fluid from the first pressure vessel(s) may be stored in a staging tank until a desired amount of heated working fluid is obtained. The staging tank may be insulated.

The solar collector may be configured to heat fluid, which in turn heats the fluid in the pressure vessel.

The solar collector may include a plurality of different type of solar collectors. The different types of collectors may be coupled sequentially. In such case, relatively inexpensive solar collectors may be initially used to operate at low temperatures above ambient and then progress to more efficient but costlier components as the temperature differentials increase.

The solar collector may include unglazed polymer collectors, flat plate collectors and/or vacuum tubes.

The system may include a plurality of reservoirs, configured to be heated in series. The reservoirs may include a first reservoir, a second reservoir and a third reservoir, wherein waste fluid from the first reservoir is configured to heat the second reservoir, and waste fluid from the second reservoir is configured to heat the third reservoir.

In another form, the invention resides broadly in a solar thermal hydraulic motor comprising:

a plurality of pressure vessels configured to receive working fluid;

a solar collector, configured to heat the working fluid in at least one of the pressure vessels to thereby cause the working fluid to expand in the pressure vessel without changing phase; and

a hydraulic motor, powered by expansion of the working fluid in the pressure vessels,

wherein at least some of the plurality of pressure vessels are selectively couplable to each other to enable transfer residual pressure energy from one pressure vessel after it has been used to perform work to another pressure vessel to assist in performing work.

The solar thermal hydraulic motor may be configured to drive a generator to create electricity.

In yet another form, the invention resides broadly in a solar power method comprising:

receiving working fluid in a plurality of pressure vessels;

heating the working fluid in at least one of the plurality of pressure vessels using a solar collector, to thereby cause the working fluid to expand in the at least one pressure vessel without changing phase; and

using the expansion of the working fluid in the at least one pressure vessel to perform work at a mechanical work element, such as a hydraulic motor;

subsequently coupling the at least one pressure vessel to transfer residual pressure energy from one pressure vessel to another pressure vessel to assist in performing work by the other pressure vessel using the mechanical work element.

Any of the features described herein can be combined in any combination with any one or more of the other features described herein within the scope of the invention.

The reference to any prior art in this specification is not, and should not be taken as an acknowledgement or any form of suggestion that the prior art forms part of the common general knowledge.

BRIEF DESCRIPTION OF DRAWINGS

Various embodiments of the invention will be described with reference to the following drawings, in which:

Figure 1 diagrammatically illustrates a solar power system, according to an embodiment of the present invention.

Figure 2 diagrammatically illustrates a portion of a solar power system, according to an embodiment of the present invention.

Figure 3 illustrates a schematic of a portion of a solar power system, according to an embodiment of the present invention.

Figure 4 schematically illustrates a portion of a solar power system, according to an embodiment of the present invention.

Figure 5 illustrates a cross section of the pressure vessel container, showing the relationship between the opposing pressure vessels.

Figure 6 illustrates a system including the pressure vessel container, heat sink, and heat reservoir of Figure 4.

Figure 7 diagrammatically illustrates a solar power system, according to an embodiment of the present invention.

Figure 8 diagrammatically illustrates a pressure vessel of a solar power system, according to an embodiment of the present invention.

Figure 9 diagrammatically illustrates a regenerator of a solar power system, according to an embodiment of the present invention.

Figure 10 diagrammatically illustrates a solar power system, according to an embodiment of the present invention.

Figure 11 diagrammatically illustrates a solar power system, according to an embodiment of the present invention.

Figure 12 diagrammatically illustrates a regenerator, which may be similar to the regenerator of Figure 9, according to an embodiment of the present invention.

Figure 13 diagrammatically illustrates a first exemplary configuration of a group of three (3) thermally coupled pressure vessels, according to an embodiment of the present invention.

Figure 14 diagrammatically illustrates a second exemplary configuration of a group of four (4) thermally coupled pressure vessels, according to an embodiment of the present invention.

Figure 15 diagrammatically illustrates an exemplary configuration of N thermally coupled thermal reservoirs coupled to a single pressure vessel, according to an embodiment of the present invention.

Figure 16a diagrammatically illustrates an exemplary configuration of three thermally coupled pressure vessels, each including an associated regenerator reservoir, according to an embodiment of the present invention.

Figure 16b illustrates the configuration of Figure 16a in a first state.

Figure 16c illustrates the configuration of Figure 16a in a second state.

Figure 16d illustrates the configuration of Figure 16a in a third state.

Figure 16e illustrates the configuration of Figure 16a in a fourth state.

Figure 17 diagrammatically illustrates a solar power system using regeneration as illustrated in Figure 15, according to an embodiment of the present invention.

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way.

DESCRIPTION OF EMBODIMENTS

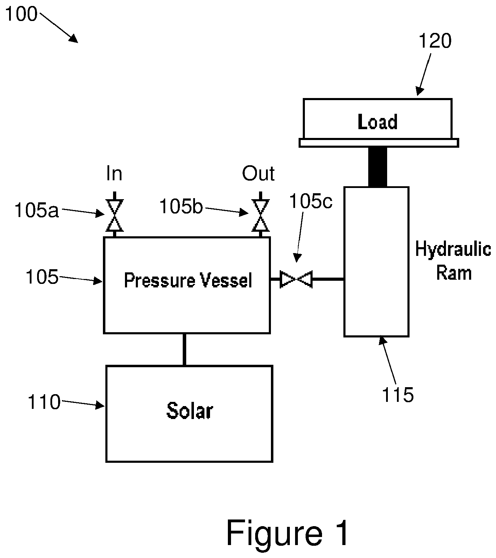

Figure 1 diagrammatically illustrates a solar power system 100, according to an embodiment of the present invention. The solar power system 100 utilises solar energy (i.e. heat from the sun) to perform work, as outlined below.
The solar power system 100 includes a pressure vessel 105 configured to receive working fluid. The working fluid is advantageously a liquid that is substantially incompressible (in contrast to a gas which is easily compressible), and which changes in volume with changes in temperature. The working fluid may, for example, comprise hydraulic fluid, but as outlined in further detail below, other fluids or combinations of fluids may be used.
A solar collector 110 is thermally coupled to the pressure vessel 105, and is configured to heat the working fluid in the pressure vessel 105 to thereby cause the working fluid to expand in the pressure vessel. The pressure vessel 105 is coupled to a hydraulic ram 115, such that expansion of the working fluid in the pressure vessel 105 drives the ram 115.
The ram 115 is illustrated as lifting a load 120, but the skilled addressee will readily appreciate that the ram 115 may be used to perform any suitable work. As an illustrative example, the ram 115 may drive a generator, crankshaft or the like.
The pressure vessel 105 includes an inlet valve 105a, an outlet valve 105b and a work valve 105c. In use, cold (non-heated) working fluid is provided into the pressure vessel 105 using the inlet valve 105a. The pressure vessel 105 is substantially entirely filled with working fluid, i.e. without any substantial amounts of air or other gases. The inlet valve 105a is then closed, providing an enclosed space (and a closed system) for the working fluid.
The solar collector 110 then heats the working fluid in the pressure vessel and the work valve 105c is opened. As the working fluid expands, it drives the hydraulic ram 115 and lifts the load 120.
Once the working fluid has been fully heated, and work applied to the load 120, the outlet valve 105b is opened, allowing the heated working fluid to escape from the pressure vessel 105, and the hydraulic ram 115 to return to a starting state.
The process may be repeated with cold (unheated) working fluid. The system may include heat sinks, enabling the heated working fluid to be cooled while other working fluid is used in the system, thereby enabling the working fluid to be reused in a circuit.

The solar collector 110 may be configured to apply heat to the pressure vessel 105 continuously. In such case, the inlet valve 105a may open and close quickly, enabling the cold working fluid to enter the chamber quickly, and be sealed therein, prior to being heated by the solar collector 110 significantly.

Alternatively, the solar collector 110 may be configured such that it is able to direct heat to the pressure vessel selectively. In such case, the solar collector 110 may be configured to not direct heat to the pressure vessel 105 during filling of the pressure vessel 105.

The solar collector 110 is configured to heat the working fluid a relatively small amount, avoiding phase changes which are associated with Rankine cycles. In one embodiment, the warm working fluid may be heated to about 30-150°C above ambient.

EXAMPLE

The pressure vessel 105 has a capacity of 10L, the hydraulic piston has a bore size of $10cm^2$ and silicone fluid is used as the working fluid.

Some physical properties of silicone fluid include the following:

Density: 0.873 g/mL
Specific Heat: 1.8 J/g/K
Volumetric Coefficient of Expansion: 0.00124 1/K
Bulk Modulus: 0.8 GPa (at 25°C)

Where there is no load on the hydraulic ram and the working fluid (silicone fluid) is heated by 25°C, thermal expansion of the fluid can be calculated by:

$$\Delta V = \text{Initial Volume * Volumetric Coefficient of Expansion * Change in Temperature}$$

$$= 10{,}000 * 0.00124 \text{ 1/K} * 25°C$$

$$= 310 \text{ mL}$$

If too much load is, however, applied to the piston, it may counter the thermal expansion of the fluid by compressing the fluid. As such, a balance between load and compression is required.

In this example, if a load of 1500kg is placed on the ram it will apply 14.71MPa onto the working fluid, which results in a change in volume as follows:

$$\Delta V = \text{-Volume / Bulk Modulus * Change in Pressure}$$

$$= \text{-10000 mL / 800MPa * 14.71MPa}$$

$$= -183.9 \text{ mL}$$

The net overall increase in volume is 310mL - 183.9mL = 126.1mL which will extend the hydraulic ram by:

$$\Delta H = \text{Volume / Area of hydraulic ram bore}$$

$$= 126 / 10cm^2$$

$$= 12.6 \text{ cm}$$

Where the hydraulic ram has extended by 12.6 cm, the net gain in gravitation potential energy is calculated as follows:

$$PEg = \text{weight * height * gravitational acceleration}$$

$$= 1500 \text{ kg} * 0.126 \text{ m} * 9.8 \text{ m/s}^2$$

$$= 1852 \text{ J}$$

Discouting the thermal mass of the pressure vessel, the thermal energy applied to the working fluid is calculated follows:

$$Q \quad = \text{volume * density * specific heat * change in temperature}$$

$$= \text{10000 ml * 0.873 g/ml * 1.8 J/g/K * 25°C}$$

$$= \text{392,850 J}$$

Efficiency is calculated as follows:

$$= \text{PEg / Q}$$

$$= \text{1,852 J / 392,850 J}$$

$$= 0.47\%$$

The above illustrates only a 25°C increase in temperature in a small (10L) pressure vessel. The inventor believes that significantly greater gains can be made with higher temperature differentials (e.g. 60°C, 90°C, 120°C or 150°C), heavier loads and/or more effective working fluids but most of all, re-using waste energy.

Furthermore, the inventor believes that the above can be readily scaled by joining pressure vessels, including re-using waste energy across pressure vessels, increasing the size of pressure vessels and/or pistons, and/or by coupling pressure vessels in parallel.

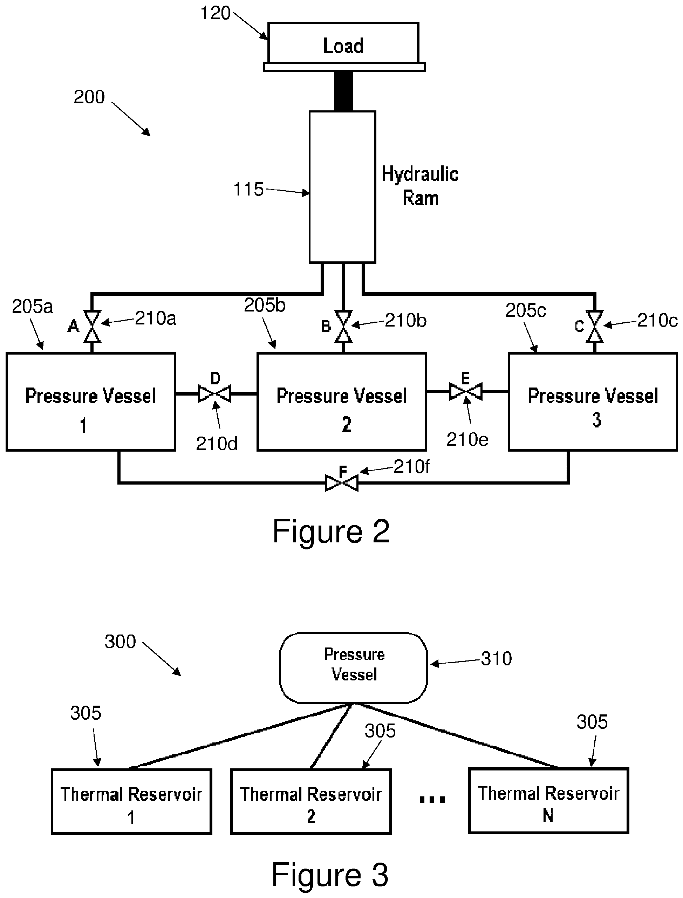

Figure 2 diagrammatically illustrates a portion of a solar power system 200, according to an embodiment of the present invention. The solar power system 200 is similar to the system 100 of Figure 1 and utilises solar energy to perform work, but includes a plurality of pressure vessels 205a-205c, and utilises energy more efficiently through energy re-use across the pressure vessels 205a-205c.

The pressure vessels 205a-205c are each selectively coupled to a hydraulic ram 115 lifting a load 120 by respective hydraulic lines and valves 210a-210c.

Furthermore, the first and second pressure vessels 205a,205b are selectively coupled to each other by a hydraulic line and valve 210d, the second and third pressure vessels 205b,205c are selectively coupled to each other by a hydraulic line and valve 210e, and the first and third pressure vessels 205a,205c are selectively coupled to each other by a hydraulic line and valve 210f.

The pressure vessels 205a-205c are thermally couplable to each other to enable the selective transfer of thermal energy between thermally coupled pressure vessels 205a-205c. Any suitable mechanism for thermal couple and decoupling may be used.

Initially all valves 210a-210f are closed and each pressure vessel 205a-205c is filled with silicone fluid. The pressure vessels are 10L in size, as outlined above in relation to Figure 1. The pressure vessels 205a-205c are also thermally decoupled.

The first valve 210a is opened and 1500kg load 120 is placed on the hydraulic ram 115. As a result, a pressure of 14.71 MPa is applied to the first pressure vessel 205a.

Heat is applied to the first pressure vessel 205a to increase the temperature by 25°C. This causes the hydraulic ram 115 to extend by 12.6 cm, with a net gain in gravitation potential energy of 1852 J, as outlined above.

The first valve 210a is then closed and the fourth valve 210d is opened. The first and second pressure vessels 205a, 205b are allowed to reach pressure equilibrium. The fourth valve 210d is then closed. The first and second pressure vessels 205a, 205b are then thermally coupled and allowed to reach temperature equilibrium. Once pressure equilibrium is achieved, both the first and second pressure vessels 205a, 205b have a pressure of 7.36 MPa (14.71 MPa / 2), and once temperature equilibrium is reached, both pressure vessels will have an increase in temperature of 12.5°C (25°C / 2) ignoring any losses from the connection.

The sixth valve 210f is opened. The first and third pressure vessels 205a, 205c are allowed to reach pressure equilibrium. Once pressure equilibrium is achieved, both the first and second pressure vessels 205a, 205c have a pressure of 3.68 MPa (7.36 MPa / 2), ignoring any losses from the connection.

The sixth valve 210f is closed and the second valve 210b is opened.

As outlined above, the second pressure vessel 205b had a pressure of 7.36 MPa prior to the second valve 210b being opened, and with the 1500kg load now being applied to the second pressure vessel 205b, the pressure becomes 14.71 MPa. The increase in pressure is calculated as:

$$= \text{14.71 MPa} - \text{7.36 MPa}$$

$$= \text{7.35 MPa}$$

Compression is calculated as follows:

$$\Delta V \quad = \text{-Volume / Bulk Modulus * Change in Pressure}$$

$$= \text{10000 ml / 800 MPa * 7.35 MPa}$$

$$= \text{-91.88 ml}$$

As outlined above, the second pressure vessel 205b has been heated by 12.5°C from the first pressure vessel 205a. The second pressure vessel 205b is then heated by a further 12.5°C from a heat source to provide a total increase of 25°C.

The thermal energy applied to the working fluid from a heat source is half that required to heat the first pressure vessel by 25°C and is calculated as follows:

$$Q \ = \text{volume * density * specific heat * change in temperature}$$

$$= \text{10000 ml * 0.873 g/ml * 1.8 J/g/K * 12.5°C}$$

$$= \text{196,425 J}$$

The thermal expansion is calculated as follows:

$$\Delta V = \text{Initial Volume * Volumetric Coefficient of Expansion * Change in Temperature}$$

$$= \text{10,000 ml * 0.00124 1/K * 25°C}$$

$$= \text{310 ml}$$

The net overall increase in volume is calculated as follows:

$$= \text{Thermal Expansion – Compression}$$

$$= \text{310 ml - 91.88 ml}$$

$$= \text{218.1 ml}$$

The extension of the hydraulic ram is calculated as follows:

$$\Delta H = \text{Volume / Area}$$

$$= \text{218.1 ml / 10 cm2}$$

$$= \text{21.8 cm}$$

The net gain in gravitational potential energy is calculated as follows:

$$PEg \quad = \text{weight * height * gravitational acceleration}$$

$$= \text{1500 kg * 0.218 m * 9.8 m/s2}$$

$$= \text{3204.6 J}$$

Efficiency is calculated as follows:

$$= \text{PEg / Q (step13(a))}$$

$$= \text{3204.6 J / 196,425 J}$$

$$= \text{1.63\%}$$

Energy re-use, through both reuse of heat and pressure, has delivered a near 3.5 fold improvement in efficiency compared to the expansion of the first pressure vessel 205a.

The second valve 210b is closed, and the fifth valve 210e is opened. The second and third pressure vessels 205b,205c are allowed to reach pressure equilibrium. Once pressure equilibrium is achieved, both the second and third pressure vessels 205b, 205c have a pressure of 9.2 MPa (14.71 MPa + 3.68 MPa / 2).

The fifth valve 210e is closed and the third valve 210c is opened.

The load 120 on the hydraulic ram 115 is increased to 3000 kg exerting 29.42 MPa of pressure on the working fluid.

As outlined above, the third pressure vessel 205c had a pressure of 9.2 MPa, and the increase in pressure caused by the load 120 is calculated as:

$$= 29.42 \text{ MPa (step 19)} - 9.2 \text{ MPa}$$

$$= 20.22 \text{ MPa}$$

Compression is calculated as follows:

$$\Delta V \quad = \text{-Volume / Bulk Modulus * Change in Pressure}$$

$$= 10000 \text{ ml / } 800 \text{ MPa * } 20.22 \text{ MPa}$$

$$= \text{-252.75 ml}$$

The third pressure vessel 205c is heated by 25°C.

The thermal expansion is calculated as follows:

$$\Delta V \quad = \text{Initial Volume * Volumetric Coefficient of Expansion * Change in Temperature}$$

$$= 10,000 \text{ ml * } 0.00124 \text{ 1/K * } 25°C$$

$$= 310 \text{ ml}$$

The net overall increase in volume is calculated as follows:

$$= \text{Thermal Expansion} - \text{Compression (step 21)}$$

$$= 310 \text{ ml} - 252.75 \text{ ml}$$

$$= 57.25 \text{ ml}$$

The extension of the hydraulic ram is calculated as follows:

$$\Delta H \quad = \text{Volume / Area}$$

$$= 57.24 \text{ ml / } 10 \text{ cm2}$$

$$= 5.7 \text{ cm}$$

The above demonstrates that reuse of pressure between pressure vessels 205a-205c enables the system to operate at greater efficiencies, at higher pressures and with higher loads.

While only three pressure vessels are shown, the more pressure vessels that are pressurised, the greater the efficiency.

REUSE OF PRESSURE

The teachings above may be generalised to a set of pressure vessels H1 to Hn which are all in the heating portion of the thermodynamic cycle and a set of pressure vessels C1 to Cn which are all in the cooling portion of the thermodynamic cycle.

H1 is at the lowest temperature with each subsequent pressure vessel increasing in temperature. Hn is at the end of the heating process.

C1 is at the highest temperature with each subsequent pressure vessel decreasing in temperature. Cn is at the end of the cooling process.

Each heated pressure vessel will pressurise m cold pressure vessels (efficiency is increased as m increases).

The process is as follows:

1) Hn is hydraulically coupled to pressure vessel Cn.
2) Once the desired pressure is reached in Cn, the hydraulic coupling with Hn is severed.
3) Steps 1 and 2 are repeated for all C pressure vessels in descending order till Cn-m+1.
4) Cn becomes H1.
5) Hn becomes C1.
6) All other pressure vessel numbers are increased by 1.

The process is then repeated, and may be repeated indefinitely.

REUSE OF THERMAL ENERGY

The teachings above may be generalised in relation to reuse of thermal energy to a set of N thermal reservoirs each labelled '1' to 'N' each of which can be thermally coupled to a pressure vessel.

Figure 3 illustrates a schematic of a portion of a solar power system 300, according to an embodiment of the present invention. The solar power system 300 includes a plurality of thermal reservoirs 305 coupled to a pressure vessel 310.

Use of the system 300 may be performed as follows:

1) The pressure vessel 310 is thermally coupled to an external heat source and is heated.
2) Once the pressure vessel 310 is heated to the desired temperature, the thermal coupling to the heat source is severed.
3) The pressure vessel 310 is thermally coupled to the first thermal reservoir 305 (labelled '1').
4) Once the desired temperature is reached, the thermal coupling to the first thermal reservoir 305 is severed.
5) Steps 3 and 4 are repeated with all thermal reservoirs 305 in ascending order until the final thermal reservoir (labelled 'N').
6) The pressure vessel 310 is thermally coupled to a heat sink and is cooled.
7) Once the pressure vessel 310 is cooled to desired temperature, the thermal coupling to the heat sink is severed.
8) Working fluid is replenished in the pressure vessel 310.
9) The pressure vessel 310 is thermally coupled to the final thermal reservoir (labelled 'N').
10) Once the desired temperature is reached, the thermal coupling to the final thermal reservoir (labelled 'N') is severed.
11) Steps 9 and 10 are repeated with all thermal reservoirs 305 in descending order until the first thermal reservoir (labelled '1').

The process is then repeated, and may be repeated indefinitely.
In the generalisation described above:

1) the hot working fluid is cooled when coupling with the reservoirs in ascending order.
2) The cold working fluid is heated when coupling with the reservoirs in descending order.
3) The concurrent use of a plurality of pressure vessels allows the possibility of using heat transfer fluids rather than thermal reservoirs (or a combination of the two). To clarify, the heat transfer fluid can be used to directly heat/cool pressure vessels in opposing stages of the thermodynamic cycle.

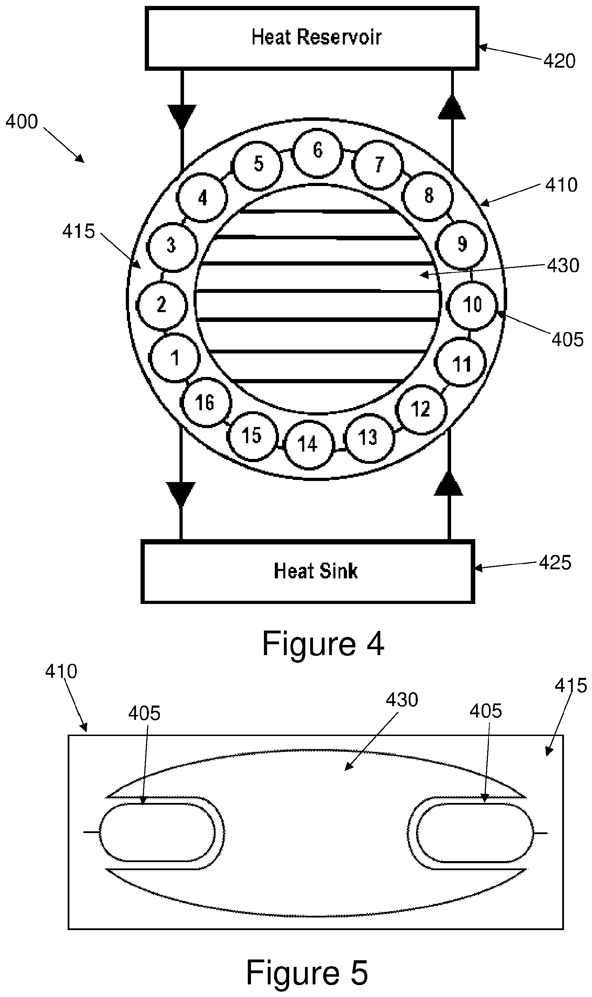

Figure 4 schematically illustrates a portion of a solar power system 400, according to an embodiment of the present invention. The solar power system 400 is similar to the system 200 of Figure 2 and utilises energy more efficiently through energy re-use across the pressure vessels 405.
The system 400 includes a pressure vessel container 410 housing the pressure vessels 405, and heat transfer fluid 415. The pressure vessel container 410 is an insulated container, to avoid thermal loss, which is coupled to a heat reservoir 420, such as a solar collector on one side, to heat the pressure vessels 405, and a heat sink 425 on an opposite side, to cool the pressure vessels 405.
The pressure vessels 405 are distributed in a circular arrangement that can rotate around a central axis. This circular motion allows for a sequence of thermodynamic processes to occur, similar to that described above. One full revolution corresponds to a complete thermodynamic cycle, and the process may be repeated indefinitely.
The pressure vessel container 410 and the heat reservoir 420 use the same heat transfer fluid, and such fluid can flow between the pressure vessel container 410 and the heat reservoir 420. The heat reservoir 420 includes an inlet and outlet, coupling the heat reservoir 420 to the pressure vessel container 410 such that one or more of the pressure vessels 405 are heated to a desired temperature.
Similarly, the pressure vessel container 410 and the heat sink 425 use the same heat transfer fluid, and such fluid can flow between the pressure vessel container 410 and the heat sink 425. The heat sink 425 includes an inlet and outlet, coupling the heat sink 425 to the pressure vessel container 410 such that one or more of the pressure vessels 405 are cooled to a desired temperature.

In alternative embodiments, a heat exchanger may be used between the heat reservoir 420 and the pressure vessel container 410 and/or the heat sink 425 and the pressure vessel container 410.

The system further includes thermal reservoirs 430, that extend across a width of the pressure vessel container 410, to store and transfer waste heat from pressure vessels 405 during the cooling process to pressure vessels 405 during the heating process.

The thermal reservoirs 430 run perpendicular to the inlets and outlets of the heat reservoir 420 and heat sink 425 i.e., run perpendicular to the heating and cooling sides and are thermally insulated from each other to prevent them from acting as a single unit.

The pressure vessels 405 and thermal reservoirs 430 are positioned as close as possible to each other.

The pressure vessels 405 and thermal reservoirs 430 are configured to maximally and mutually share surface area with each other to increase the rate of heat flow.

Figure 5 illustrates a cross section of the pressure vessel container 410, showing the relationship between the opposing pressure vessels 405 (e.g. those numbered 10 and 2 in Figure 4)

While not illustrated, the pressure vessels 405 will be hydraulically connected to a hydraulic motor or similar, a working fluid reservoir, and other pressure vessels which are involved in pre-pressurisation, as outlined above. The hydraulic connections may operate directly from pressure vessel to pressure vessel, or from pressure vessel to a hydraulic manifold.

In use, the pressure vessels 405 in positions 1-3 are in the heating process, where the pressure vessels are heated by the thermal reservoirs 430 as the pressure vessels 405 move clockwise towards the heat reservoir inlet.

The pressure vessels 405 are hydraulically connected to the hydraulic motor, and expansion of fluid in the pressure vessels 405 is used to drive the hydraulic motor.

The pressure vessels 405 in positions 4-8 are heated to the desired temperature, and the hydraulic connection to the hydraulic motor is therefore closed. These pressure vessels 405 may then be hydraulically connected with the desired number of cooled pressure vessels for pre-pressurisation. For example, if each heated pressure vessel is used to pre-pressurise two cooled vessels, the pressure vessel 405 at position 8 may be hydraulically connected to pressure vessel 405 at position 16 (until it reaches pressure equilibrium) followed by the pressure vessel 405 at position 15 (until it reaches pressure equilibrium), as outlined above.

The pressure vessels 405 in positions 9-11 are in the cooling process, where the pressure vessels are hydraulically connected to the working fluid reservoir, and the pressure vessels are cooled by the thermal reservoirs 430 as the pressure vessels 405 move clockwise towards the heat sink inlet.

The pressure vessels 405 in positions 12-16 are cooled to the desired temperature, and the hydraulic connection to the working fluid reservoir is therefore closed.

The pressure vessels 405 rotate such that they each change position between positions 1 and 16.

Such rotation enables the pressure vessel to sequentially perform work, which enables the system to function continuously.

The pressure vessels 405 outlined above may take any suitable form, including a carbon/stainless steel pressure pipes, aluminium cylinders etc.

Furthermore, if the pressure vessel container's heat capacity is sufficient, it may take the role of heat reservoir, at least partially.

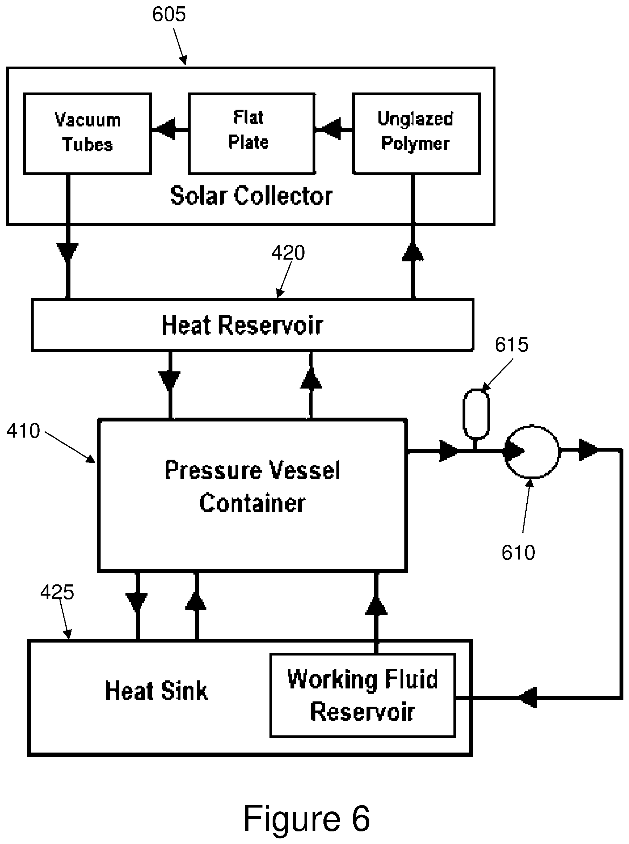

Figure 6 illustrates a system 600 including the pressure vessel container 410, heat sink 425, and heat reservoir 420, as outlined above.

A solar collector 605 is coupled to the heat reservoir, to provide heat thereto. The solar collector may be formed of any suitable materials, but is preferably formed from 'Off the shelf' components that are relatively inexpensive and efficient.

Furthermore, the solar collector 605 may comprise components that are pipelined to achieve a more cost-effective process. In particular, less expensive solar collectors can be used at close to ambient temperature, and more efficient but costlier components can be used for greater temperature differentials. Examples include unglazed polymer collectors feeding to flat plates finishing with vacuum tubes.

The solar collector 605 has an inlet and outlet to and from the heat reservoir (or pressure vessel container if applicable) with a small pump (not illustrated) to circulate heat transfer fluid.

Pressure vessels in the pressure vessel container 410 are connected to a hydraulic line connected to a hydraulic motor 610, to drive a generator or perform work, after which it is provided to a working fluid reservoir associated with the heat sink. A hydraulic accumulator 615 may be used to deal with sporadic flow rates.

A small pump is then provided to pump cooled working fluid from the working fluid reservoir back to the pressure vessels to keep them filled.

Advantageously the system 600 is cheap and easy to mass produce and implement at scale; uses a modular design that facilitates redundancy while limiting complexity; and operates at a wider range of temperatures (including small temperature differentials).

The system 600 further allows for a rapid response to fluctuating energy requirements by altering the rotational speed of the pressure vessels. For example, electricity generation can be ramped up by increasing the rotational speed (at the cost of efficiency), or ramped down by decreasing the rotational speed.

The system 600 provides for flexible generation in an efficient manner, thus addressing both intermittency and energy storage.

The above systems describe use of thermal reservoirs in the pressure vessel container. In alternative embodiments, however, the thermal stratification of water (or another suitable liquid) may be used.

In particular, if the movement of the pressure vessels is slow enough to limit mixing and the heat conduction of the internal contents of the pressure vessel container are restricted, then the heat transfer fluid inside the pressure vessel container may become thermally stratified and behave in a similar manner to the thermal reservoirs, with a heat gradient from top to bottom.

If the conditions are not ideal, then insulated barriers may be used to assist in developing and maintaining thermal stratification. The barriers will also have a minimal clearance with the pressure vessels.

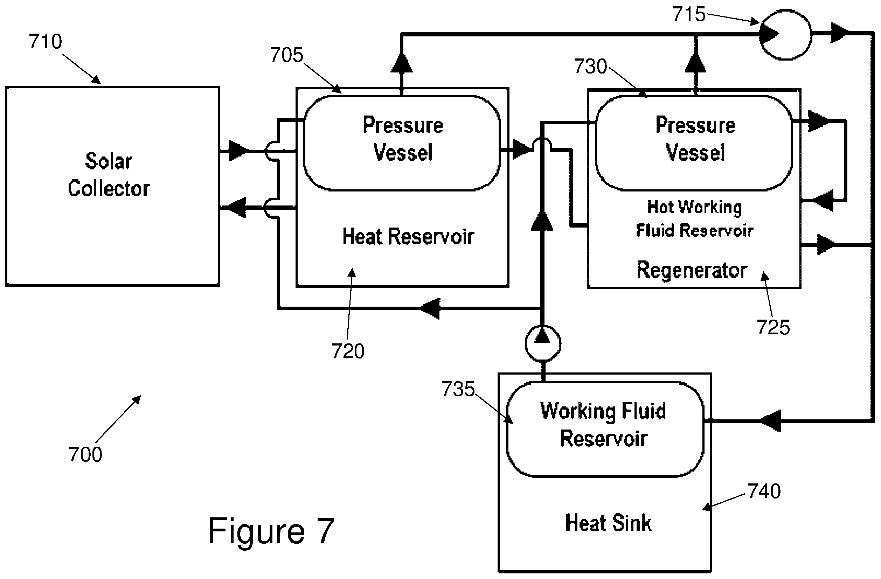

Figure 7 diagrammatically illustrates a solar power system 700, according to yet an embodiment of the present invention. The solar power system 700 is similar to the systems described above and utilises solar energy to perform work, as outlined below.

The system includes a first pressure vessel 705, and a solar collector 710 configured to heat the working fluid in the first pressure vessel 705 to thereby cause the working fluid to expand in the first pressure vessel 705.

The first pressure vessel 705 is coupled to a hydraulic motor 715, such that expansion of the working fluid in the first pressure vessel 705 drives the hydraulic motor 715. The hydraulic motor 715 may be configured to rotate and thereby generate electricity, or perform any suitable work.

The solar collector 710 is configured to heat a heat reservoir 720, which is thermally coupled to the first pressure vessel 705. The use of the heat reservoir 720 enables the solar collector 710 to be positioned independently of the first pressure vessel 705, and coupled thereto, e.g. by a heating fluid or heat transfer system.

In particular, the solar collector 710 may heat a heating fluid (e.g. water or oil), which is recirculated through the heat reservoir 720 to thereby indirectly heat the working fluid. Such configuration enables low-grade thermal storage which is relatively easy to build. In fact, water can be used as a heating fluid, without phase change, which is simple and cost effective, or oil may be used if slightly higher temperature differentials are desired.

Although, water (or oil) lacks the high volumetric heat capacities of other thermal stores like molten salts, it is simple to handle, and does not have the high capital cost of construction associated with molten salts.

The heat reservoir 720 may comprise an insulated container to collect and store the low grade thermal energy, which in turn is used to heat the working fluid.

Once the working fluid is fully heated, and has performed the work, it is pumped into a regenerator reservoir 725. The regenerator reservoir 725 is configured to heat a second pressure vessel 730, which is similar to the first pressure vessel 705 in that heating and expansion of working fluid therein is used to drive the hydraulic motor 715. The regenerator reservoir 725 is also an insulated container, to prevent or minimise thermal losses.

In other words, when working fluid is heated and used for work in the first pressure vessel 715 it is moved to heat working fluid in the second pressure vessel 730. This functions to extract energy (heat) from the hot working fluid before being returned to a working fluid reservoir 735, where it is ultimately cooled for re-use.

A heat sink 740 is coupled to the working fluid reservoir 735, thereby enabling the warm working fluid therein to be effectively cooled prior to re-use. The heat sink 740 can be can be air cooled or water cooled depending on size, availability and requirements.

While not illustrated, the system 700 includes pumps and various valves to control the flow of working fluid in the system. Furthermore, valves are used to enable the first and second pressure vessels to operate together, either simultaneously or sequentially

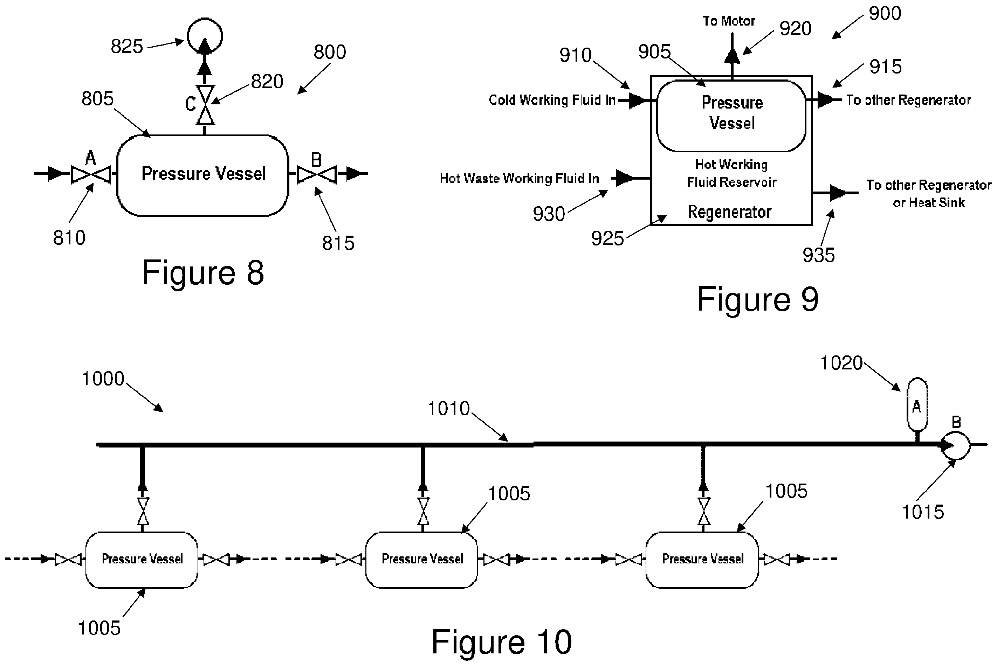

Figure 8 diagrammatically illustrates a pressure vessel 800, which may be similar or identical to the first and/or second pressure vessels 705, 730 of the system 700, according to an embodiment of the present invention.

The pressure vessel 800 comprises a sealed vessel 805, including an input valve 810, for receiving cold working fluid, an outlet valve 815, for expelling hot working fluid, and a work valve 820, through which expanding working fluid drives a hydraulic motor 825 when heated by a solar collector (not shown).

Each of the valves may be automatically opened and closed at pre-set points by a controller.

Figure 9 diagrammatically illustrates a regenerator 900, which may be similar or identical to the second pressure vessel 730 and regenerator reservoir 725 of the system 700, according to an embodiment of the present invention.

The regenerator 900 includes a sealed vessel 905, including an input valve 910, for receiving cold working fluid, and an outlet valve 915, for expelling hot working fluid into another regenerator reservoir 925, and a work valve 920, through which expanding working fluid drives a hydraulic motor when heated.

The regenerator 900 receives, however, hot waste working fluid from another pressure vessel (such as the first pressure vessel 705) or another regenerator reservoir into a regenerator reservoir 925 by a regenerator input 930. This hot waste working fluid is then used to heat cold working fluid in the sealed vessel 905 to power the motor 920.

As the hot waste working fluid heats the cold working fluid in the sealed vessel 905, it itself cools, and is transferred to another regenerator reservoir or returns to a working fluid reservoir and heat sink by a regenerator output 935 for subsequent cooling then reuse.

The use of the regenerator 900 ensures that hot working fluid, once it has been used for work, isn't just wasted, but instead heat therefrom is transferred to cold working fluid for further work to be performed.

While the system 700 illustrates two pressure vessels connected to the same hydraulic motor 715, the skilled addressee will readily appreciate that any suitable number of pressure vessels may be coupled together.

Figure 10 diagrammatically illustrates a solar power system 1000, according to an embodiment of the present invention. The solar power system 1000 is similar to the systems described earlier but comprises a plurality of pressure vessels 1005 coupled to a single hydraulic line 1010 and motor 1015.

The rate of working fluid being displaced from a pressure vessel 1005 during thermal expansion is not linear. Hydraulic circuits rely on a fairly constant flow of working fluid and thus the multiple pressure vessels 1005 may work together in a coordinated manner to provide a constant flow. Thus, all pressure vessels will be engaged in such a way as to maintain an acceptable rate of fluid displacement.

As an illustrative example, the pressure vessels 1005 may be operated at a particular sequence to provide a relatively smooth flow of working fluid in the hydraulic line 1010.

The hydraulic motor 1015 may drive a generator, and thereby generate electricity. The skilled addressee will, however, appreciate that the motor 1015 may be used to drive any suitable machine or equipment.

Finally, the hydraulic line 1010 includes a hydraulic accumulator 1020 to function as a pressure storage reservoir and to smoothen sporadic displacement

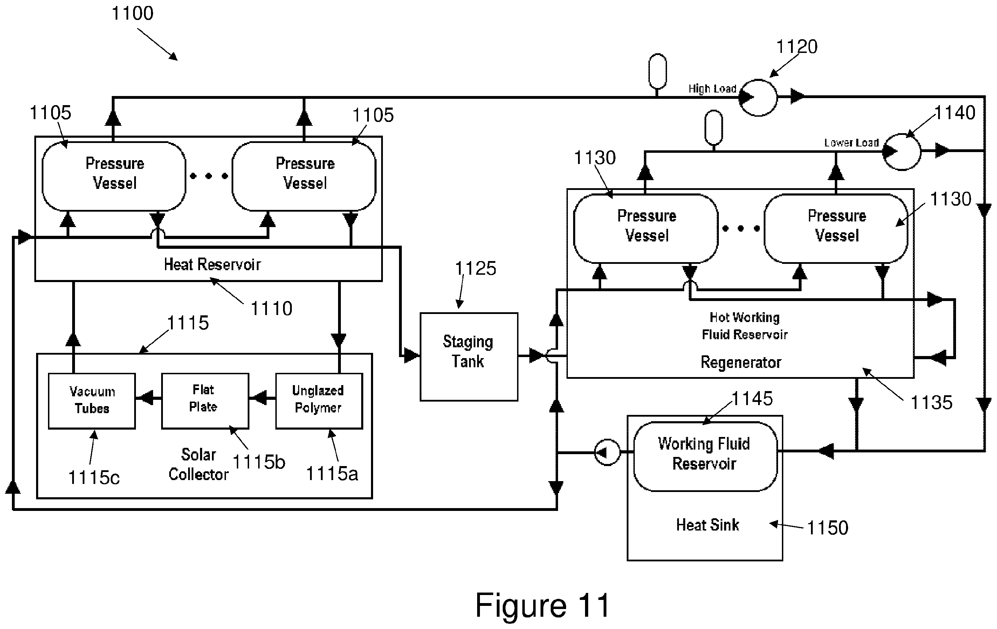

Figure 11 diagrammatically illustrates a solar power system 1100, according to an embodiment of the present invention. The solar power system 1100 is similar to the systems described above.

The system 1100 includes a plurality of first pressure vessels 1105 in a first heat reservoir 1110, which is heated by a solar collector 1115.

The solar collector 1115 comprises a plurality of different technologies operating in sequence including an unglazed polymer collector 1115a, a flat plate 1115b and vacuum tubes 1115c. Such configuration provides a good balance between cost and effectiveness as it uses low cost collectors for initial heating, followed by more expensive (and more efficient) collectors.

The solar collector 1115 may heat water, oil or any other heating fluid, and recirculate same in the heat reservoir 1110.

The first pressure vessels 1105 power a high load hydraulic motor 1120. The hydraulic motor may be coupled to a generator, or be used to power any machine or thing.

Once the working fluid has been heated (and thus used), it is pumped from the pressure vessel 1105 into a staging tank 1125. The staging tank is insulated, and enables a desired batch size of hot working fluid to be collected for reuse.

The system 1100 further includes a plurality of second pressure vessels 1130 in a second (regeneration) heat reservoir 1135, which is heated by hot working fluid from the staging tank 1125. Such configuration enables the hot working fluid to be used to heat further cold working fluid, rather than its heat simply going to waste.

The second pressure vessels 1130 power a low load hydraulic motor 1120. The hydraulic motor may be coupled to a generator, or be used to power any machine or thing.

Such configuration enables regenerated heat from the working fluid to work on another hydraulic circuit under a lower load, rather than simply being wasted, and without having to work together with the high load circuit.

As hydraulic systems are well known, the output of the system may be used to power a wide range of equipment, which may include off the shelf equipment, e.g. in the context of mining or power generation, with thermal expansion of the working fluid taking the place of a hydraulic pump.

Finally, the working fluid is returned to a working fluid reservoir 1145 with associated heat sink 1150 to cool it for subsequent re-use.

As the system 1100 involves non-phase changing working fluids, regeneration is able to provide a recursive process where waste heat is reincorporated (while viable) to maximise yield.

While Figure 11 illustrates the hydraulic motors 1120, 1140 (and the associated hydraulic lines) as being separate to the first and second (regeneration) heat reservoirs 1110, 1135, the skilled addressee will readily appreciate that these motors (and lines) may be located inside the first or second (regeneration) heat reservoir 1110, 1135 in which the pressure vessels 1105 providing power thereto are located. This may increase the internal energy contained in the first and second (regeneration) heat reservoirs 1110, 1135 and prevent heat loss.

Multiple regenerators may be coupled in sequence, and in some embodiments, heat exchangers may be used to transfer heat from hot waste working fluid to the regenerators, and thereby the pressure vessels.

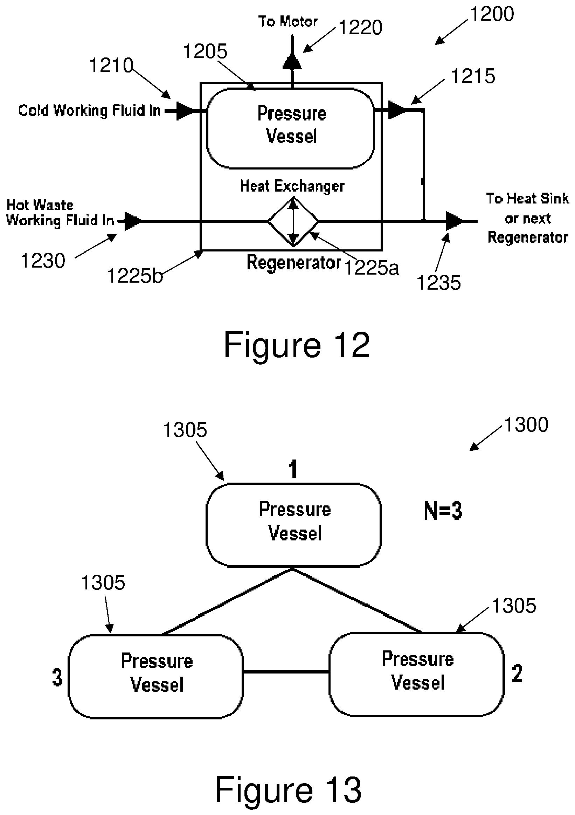

Figure 12 diagrammatically illustrates a regenerator 1200, which may be similar to the regenerator 900, according to an embodiment of the present invention.

The regenerator 1200 includes a sealed vessel 1205, including an input valve 1210, for receiving cold working fluid, and an outlet valve 1215, for expelling hot working fluid to the next regenerator 1200 or a heat sink, and a work valve 1220, through which expanding working fluid drives a hydraulic motor when heated.

The regenerator 1200 receives, however, hot waste working fluid from another pressure vessel into a heat exchanger 1225a from a regenerator input 1230, to thereby heat a regenerator reservoir 1225b. This hot waste working fluid is then used to heat cold working fluid in the sealed vessel 1205 to power the motor 1220.

As the hot waste working fluid is used to heat the cold working fluid in the sealed vessel 1205, it itself cools, but may still have sufficient heat to be used in a subsequent regenerator 1200, and is therefore provided to the next regenerator, and ultimately to a heat sink. At the same time, warm working fluid from the outlet valve 1215 is also provided to the next regenerator 1200, such that its heat may also be utilised.

The use of regenerators 1200 ensures that hot working fluid, once it has been used for work, isn't just wasted, but instead heat therefrom is transferred to cold working fluid for further work to be performed. The use of multiple regenerators 1200 with heat exchangers ensures that heat is efficiently re-used, and may even alleviate the need for heat sinks (or at least reduce the load requirements on any heat sinks).

After heating, the working fluid contains a significant amount of thermal energy, and therefore efficiently reusing this energy can significantly improve the efficiency of the systems and methods described herein. Similarly, even the heating fluid, after having heated the working fluid, will have significant amounts of thermal energy remaining, which may be reused.

As an illustrative example, a first vessel heated to 100°C may be used to heat a second vessel at 20°C. If the first and second vessels are of the same size (volume) and there is no thermal loss, the vessels will reach equilibrium at 60°C (100°C-40°C=60°C and 20°C+40°C=60°C).

The first vessel (now at 60°C) may then be used to heat a third vessel that is at 20°C. If the first and third vessels are of the same size (volume) and there is no thermal loss, the vessels will reach equilibrium at 40°C (60°C-20°C=40°C and 20°C+20°C=40°C).

Such configuration is particularly useful for pre-heating pressure vessels, or more specifically heating pressure vessels in a particular sequence for efficiency. In the above example, the second pressure vessel may subsequently be heated to 100°C using only half the thermal energy, as it has already been heated from 20°C to 60°C. The process may be repeated various times in various configurations to ensure efficient heating of fluid in working vessels. Several non-limiting examples are illustrated below.

In certain embodiments, a group of pressure vessels, each of which has thermal access to all other members in the group are used. Such thermal access gives the ability to thermally couple a pressure vessel to another and then sever that coupling as required. Each pressure vessel will have thermal access to a heat reservoir, i.e. each pressure vessel can thermally couple to the heat reservoir for heating.

The skilled addressee will readily appreciate that such thermal access may be implemented in any suitable manner, including by circulating thermal fluid between the pressure vessels. Similarly, thermal decoupling could involve stopping circulation by closing off appropriate valves.

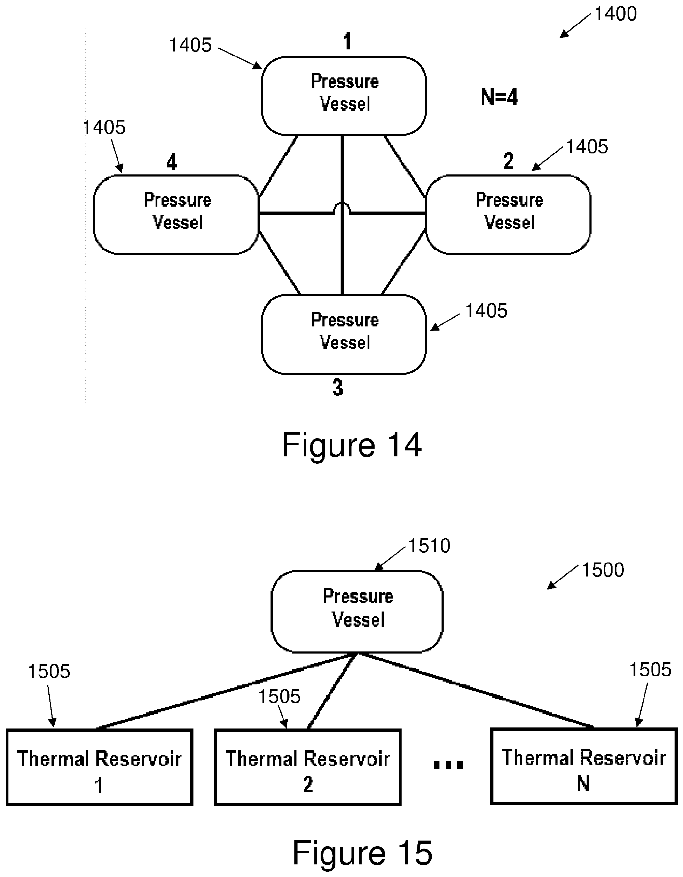

Figure 13 illustrates a first exemplary configuration 1300 of a group of three (3) thermally coupled pressure vessels 1305, according to an embodiment of the present invention. Figure 14 illustrates a second exemplary configuration 1400 of a group of four (4) thermally coupled pressure vessels 1405, according to an embodiment of the present invention. Any number of pressure vessels may be configured is such relationship.

A method of heating fluid in the pressure vessels is described below, which is particularly suited to the configurations described in Figures 13 and 14.

Initially, a first pressure vessel (pressure vessel '1') is thermally coupled with a heat reservoir (not shown) and is heated. During this heating, the first pressure vessel may be used to perform work, as outlined above.

Once thermal equilibrium is reached, or the first pressure vessel is heated to a desired level, the thermal coupling is severed, e.g. by shutting a valve to the heat reservoir.

The first pressure vessel is then thermally coupled with a second pressure vessel (pressure vessel '2') to heat the second pressure vessel. During this heating, the second pressure vessel may be used to perform work, as outlined above.

Once thermal equilibrium is reached, or the second pressure vessel is heated to a desired level, the thermal coupling between the first and second pressure vessels is severed.

The first pressure vessel is then thermally coupled to a third pressure vessel (pressure vessel '3') to heat the third pressure vessel. During this heating, the third pressure vessel may be used to perform work, as outlined above.

Once thermal equilibrium is reached, or the third pressure vessel is heated to a desired level, the thermal coupling between the first and third pressure vessels is severed.

This is then repeated for all subsequent pressure vessels, until thermal equilibrium is reached with the last pressure vessel, or the last pressure vessel is heated to a desired level, upon which the thermal coupling between the first and final pressure vessels is severed.

The fluid in the first pressure vessel may then be replaced with cold working fluid, and the process is repeated but starting at the second pressure vessel. In particular, the first pressure vessel is renumbered to become the last pressure vessel, and all other pressure vessels are renumbered N-1, where N is the number of the pressure vessel, and the process is repeated.

At the start of the second iteration, the first pressure vessel (previously the second pressure vessel) is the hottest pressure vessel, and the temperature decreases for the remaining pressure vessels in the sequence.

At the end of the second iteration, the pressure vessels are again renumbered, and the process is repeated. The process may repeat continuously.

While the above steps have been described sequentially, the skilled addressee will readily appreciate that many of the steps can be performed concurrently, particularly as the number of pressure vessels increases.

Figure 15 illustrates an exemplary configuration 1000 of N thermally coupled thermal reservoirs 1505 coupled to a single pressure vessel 1510, according to an embodiment of the present invention.

A method of operating exemplary configuration of Figure 15 is described below.

The pressure vessel 1510 is thermally coupled with a heat reservoir (not illustrated) and is heated to a desired working temperature. This may be performed by achieving thermal equilibrium between the heat reservoir and the pressure vessel 1510.

The thermal coupling between the heat reservoir and the pressure vessel 1510 is then severed.

The pressure vessel 1510 is then thermally coupled with a first thermal reservoir 1005 (thermal reservoir '1').

Once thermal equilibrium is reached, or reached within a desired threshold tolerance, the thermal coupling between the pressure vessel 1510 and the first thermal reservoir 1505 is severed.

These steps are repeated with all thermal reservoirs 1505 in ascending order until the last thermal reservoir 1505 (thermal reservoir 'N') is at thermal equilibrium with the pressure vessel 1510.

The working fluid in the pressure vessel 1510 is replaced with cold working fluid.

The pressure vessel 1510 is thermally coupled with the last thermal reservoir 1505 (thermal reservoir 'N').

Once thermal equilibrium is reached, the thermal coupling to the last thermal reservoir 1505 (thermal reservoir 'N') is severed.

These steps are repeated with all thermal reservoirs 1505 in descending order until the pressure vessel 1510 is at thermal equilibrium with the first thermal reservoir 1505 (thermal reservoir '1'). During this time, the pressure vessel 1510 may be use to perform work, as outlined above.

The entire process may then be repeated any desired number of times.

As will be readily understood by the skilled addressee, the hot working fluid is cooled when coupling with the reservoirs in ascending order and the cold working fluid is heated when coupling with the reservoirs in descending order.

In certain embodiments, pressure vessels may be provided in an insulated container able to accept thermal fluid (regenerator reservoir). During the regeneration process, each thermal reservoir is pumped into the container in the required sequence.

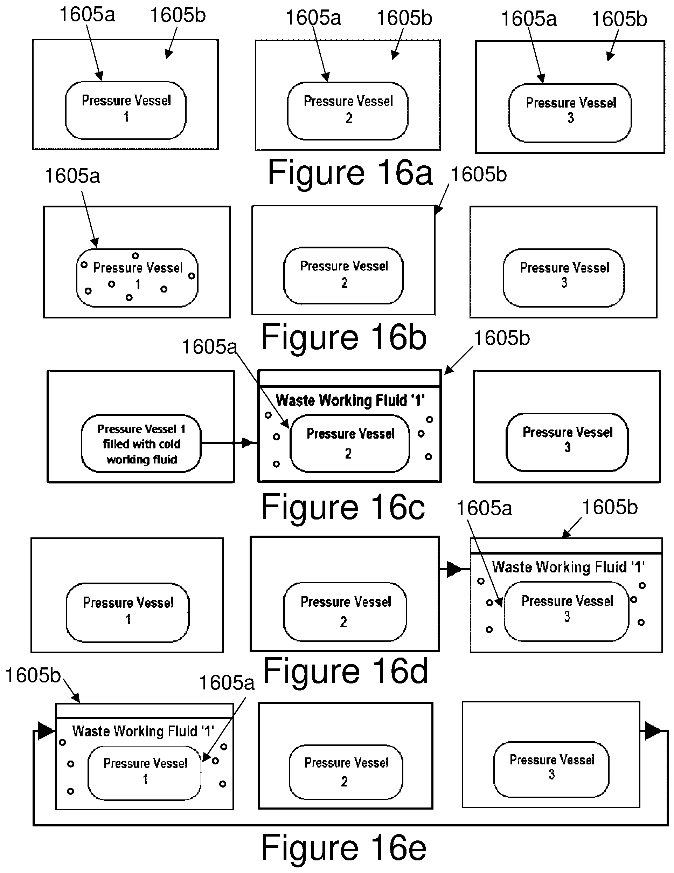

Figure 16a illustrates an exemplary configuration of three thermally coupled pressure vessels 1605a, each including an associated regenerator reservoir 1605b, according to an embodiment of the present invention.

The regenerator reservoirs 1605b may be similar or identical to the reservoir 925, described above. After a pressure vessel is heated, its working fluid is transferred to the next pressure vessel, as outlined below. In particular, Figures 16b-e illustrate a method of operating the exemplary configuration of Figure 16a.

Initially, a first pressure vessel 1605a (pressure vessel 1) is heated, as illustrated in Figure 11b, and used to perform work.

Once the first pressure vessel 1605a is heated, the working fluid therefrom is transferred into the regenerator reservoir 1605b associated with the second pressure vessel 1605a, as outlined in Figure 16c. During this phase, liquid in a second pressure vessel 1605a is heated and used to perform work.

The working fluid from the second regenerator is then transferred into the regenerator reservoir 1605b associated with the third pressure vessel 1605a, as outlined in Figure 16d. During this phase, liquid in a third pressure vessel 1605a is heated and used to perform work.

Finally, the working fluid from the third regenerator is transferred into the regenerator reservoir 1605b associated with the first pressure vessel 1605a, as outlined in Figure 16e. The first pressure vessel is filled with cold fluid after the warm fluid was expelled as outlined above. During this phase, liquid in the first pressure vessel 1605a is heated and used to perform work.

This cycle then repeats, but this time with the second pressure vessel being heated. Essentially, the second pressure vessel is relabelled as the first pressure vessel, the third pressure vessel is relabelled as the second pressure vessel, and the first pressure vessel is relabelled as the third pressure vessel.

The above configuration can be extended to any number of suitable pressure vessels in such arrangement.

The process (generalised) may be summarised as follows:

The first pressure vessel becomes thermally coupled with the heat reservoir and is heated to working temperature and is used to perform work. Once thermal equilibrium is reached, the thermal coupling is severed.

The waste working fluid from the first pressure vessel is transferred to the next pressure vessel and becomes thermally coupled, heating the second pressure vessel and performing work.

This process is repeated for all remaining pressure vessels.

The first pressure vessel is filled with cold working fluid, and accepts the waste working fluid from the last pressure vessel. At this stage, little energy is left in the waste working fluid, and it is removed.

The first pressure vessel becomes the last pressure vessel, and all other pressure vessels become pressure vessel N-1, where N was the original pressure vessel number.

The process is then repeated with the new numbering.

Although the steps are described sequentially, many steps can be performed concurrently, particularly as N increases.

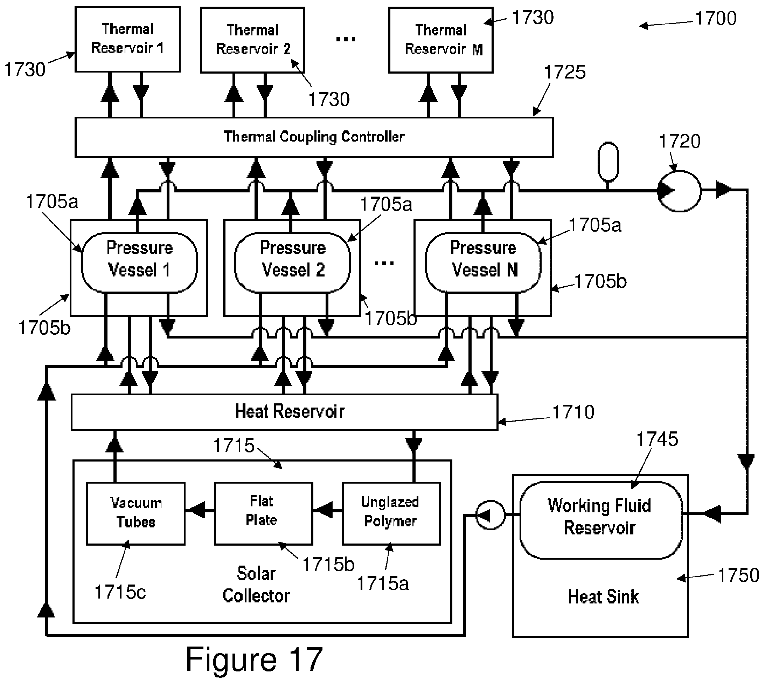

Figure 17 diagrammatically illustrates a solar power system 1700, according to an embodiment of the present invention. The solar power system 1700 is similar to the systems described earlier.

The system 1700 includes a plurality of pressure vessels 1705a, each including an associated reservoir 1705b, which can be thermally coupled to a heat reservoir 1710.

The heat reservoir 1710 is heated by a solar collector 1715.

The solar collector 1715 comprises a plurality of different technologies operating in sequence including an unglazed polymer collector 1715a, a flat plate 1715b and vacuum tubes 1715c. Such configuration provides a good balance between cost and effectiveness as it uses low cost collectors for initial heating, followed by more expensive (and more efficient) collectors.

The solar collector 1715 may heat water, oil or any other heating fluid, and recirculate same in the heat reservoir 1710.

The pressure vessels 1705a power a hydraulic motor 1720. The hydraulic motor 1720 may be coupled to a generator, or be used to power any machine or thing.

The system 1700 further includes a plurality of thermal reservoirs 1730 which are heated and cooled by thermally coupling with pressure vessels 1705a and associated reservoirs 1705b, through a thermal coupling controller 1725.

The thermal coupling controller 1725 opens and severs thermal coupling from thermal reservoirs 1730 and pressure vessels 1705a and associated reservoirs 1705b. This is performed in a sequence as described above to implement a form of regeneration.

The skilled addressee will readily appreciate that the thermal coupling controller 1725 may be implemented in any suitable manner, including by opening and closing appropriate valves.

As hydraulic systems are well known, the output of the system may be used to power a wide range of equipment, which may include off the shelf equipment, e.g. in the context of mining or power generation, with thermal expansion of the working fluid taking the place of a hydraulic pump.

Finally, the working fluid is returned to a working fluid reservoir 1745 with associated heat sink 1750 to cool it for subsequent re-use.

The above system is described with reference to a silicone working fluid. The inventor further believes that other working fluids, such as benzene, acetic acid, turpentine or kerosene, or combinations thereof, may further improve efficiency of the system, while keeping the system simple. In fact, the inventor believes that a combination of fluids, such as mineral oil for the lubrication of seals in the hydraulic system, and acetone for its physical properties, could be used to achieve good results.

In short, the bulk modulus (resistance to compression), expansion coefficient, density and specific heat of the working fluid needs to be taken into account in order to maximise the efficiency of the overall system. If the system is under too much pressure (or load), then any thermal expansion will be only serve to increase the internal energy of the working fluid but not produce sufficient work.

Advantageously, the methods and systems described above provide a simple and effective (relatively) system for performed work, such as generating electricity.

The methods and systems enable non-concentrating (low temperature differential) solar thermal energy generation. While theoretically inefficient, the methods and systems utilise inexpensive and simple processes which are cost effective, thereby enabling utilisation of solar energy that would otherwise have been wasted.

The systems may utilise solar energy alone, and therefor may not release greenhouse gases, or alternatively only minimal greenhouse gases.

The methods and systems are not reliant on time critical operation and can handle changes in thermal energy well, unlike reciprocating engines, which are also complex.

The methods and systems described herein include closed loop systems that can be scaled up more easily than closed cycle systems, such as Stirling engines.

The methods and systems include a modular design, which can be used to add redundancy while limiting complexity. This makes the methods and systems particularly useful for use in remote areas, where the systems are built on site.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

The invention is claimed in any of its forms or modifications within the proper scope of the appended claims appropriately interpreted by those skilled in the art.

**Claims**

1. A solar power system (100,200) comprising:

   a plurality of pressure vessels (205a-205c) configured to receive working fluid;
   a solar collector (110), configured to heat the working fluid in at least one of the pressure vessels (205a-205c) to thereby cause the working fluid to expand in the pressure vessel (205a-205c) without changing phase; and
   a mechanical work element (115), configured to perform work from expansion of the working fluid in the pressure vessel (205a-205c),

   **characterized in that** at least some of the pressure vessels (205a-205c) are selectively couplable to enable transfer of residual pressure energy from one pressure vessel (205a-205c) after it has been used to perform work; and transfer of residual pressure energy to another pressure vessel (205a-205c) to assist in performing work.

2. The solar power system (100,200) of claim 1, wherein the residual pressure energy includes thermal energy.

3. The solar power system (100,200) of claim 2, including a plurality of thermal reservoirs (305), wherein the pressure vessels (205a-205c) are thermally couplable to each of the plurality of thermal reservoirs (305), optionally or preferably wherein the pressure vessels (205a-205c) are thermally couplable to one or more thermal reservoirs (305) to enable the selective transfer of thermal energy from the pressure vessel (205a-205c) to the thermal reservoir, and from the thermal reservoir to the pressure vessels (205a-205c).

4. The solar power system (100,200) of claim 2, wherein the pressure vessels (205a-205c) are thermally couplable to enable the selective transfer of thermal energy from one pressure vessel (205a-205c) to another pressure vessel (205a-205c).

5. The solar power system (100,200) of claim 1, wherein the residual pressure energy includes potential energy.

6. The solar power system (100,200) of claim 5, wherein the pressure vessels (205a-205c) comprise pressure vessels (205a-205c) that are hydraulically couplable to enable the selective transfer of pressure from one pressure vessel (205a-205c) to another pressure vessel (205a-205c), optionally or preferably wherein the pressure is generated at least in part from thermal expansion and/or at least in part according to load from the mechanical work element (115). element.

7. The solar power system (100,200) of claim 1, wherein the working fluid comprises silicone fluid.

8. The solar power system (100,200) of claim 1, wherein the mechanical work element (115) is coupled to the plurality of pressure vessels (205a-205c) to perform work from expansion of the working fluid in the pressure vessels (205a-205c) in a pre-defined work sequence.

9. The solar power system (100,200) of claim 8, wherein the plurality of pressure vessels (205a-205c) are coupled to each other to enable transfer residual energy between pressure vessels (205a-205c) in a pre-defined transfer sequence, optionally or preferably wherein the work sequence and the transfer sequence operate in parallel or are defined at least in part by the opening and closing of valves (210a-210e).

10. The solar power system (100,200) of claim 8, wherein the pressure vessels (205a-205c) are arranged in a circular arrangement, wherein the work sequence is at least partly defined by rotation of the pressure vessels (205a-205c), optionally or preferably wherein one or more thermal reservoirs (305) are provided between pressure vessels (205a-205c) to enable thermal transfer between pressure vessels (205a-205c), wherein the pressure vessels (205a-205c) are rotatable relative to the thermal reservoirs (305) to enable the thermal reservoirs (305) to selectively couple pressure vessels (205a-205c) according to their rotational position.

11. The solar power system (100,200) of claim 1, wherein heated working fluid is received in a pressure vessel container, which surrounds at least one of the pressure vessels (205a-205c), to thereby heat the at least one pressure vessel.

12. The solar power system (100,200) of claim 11, wherein a position of the pressure vessels (205a-205c) is configurable relative to the heated working fluid to enable different pressure vessels (205a-205c) to be heated by the heated working fluid at different points of time.

13. The solar power system (100,200) of claim 1, wherein the solar collector (110) is configured to heat working fluid in a first pressure vessel (205a-205c) of the plurality of pressure vessels (205a-205c), to cause the working fluid to expand in the first pressure vessel (205a-205c), and wherein heated working fluid from the first pressure vessel (205a-205c) is subsequently configured to heat working fluid in a second pressure vessel (205a-205c) to thereby cause the working fluid to expand in the second pressure vessel (205a-205c).

14. The solar power system (100,200) of claim 1, wherein the system is configured to heat the working fluid by 20-60°C.

15. A solar power method comprising:

   receiving working fluid in a plurality of pressure vessels;
   heating the working fluid in at least one of the pressure vessels (205a-205c) using a solar collector (110), to thereby cause the working fluid to expand in the at least one pressure vessel (205a-205c) without changing phase; and
   using the expansion of the working fluid in the at least one pressure vessel (205a-205c) to perform work at a mechanical work element (115), such as a hydraulic motor;
   subsequently coupling the at least one pressure vessel (205a-205c) to transfer residual pressure energy from one pressure vessel to another pressure vessel (205a-205c) to assist in performing work by the other pressure vessel (205a-205c) using the mechanical work element (115).

**Patentansprüche**

1. Ein Solarkraftsystem (100, 200), umfassend:

   eine Vielzahl von Druckbehältern (205a-205c), konfiguriert, um Arbeitsfluid aufzunehmen;
   einen Solarkollektor (110), konfiguriert, um das Arbeitsfluid in mindestens einem der Druckbehälter (205a-205c) zu erhitzen, um dadurch zu bewirken, dass sich das Arbeitsfluid in dem Druckbehälter (205a-205c) ausdehnt, ohne die Phase zu ändern; und
   ein mechanisches Arbeitselement (115), konfiguriert, um Arbeit aus der Ausdehnung des Arbeitsfluids in dem Druckbehälter (205a-205c) zu verrichten, **dadurch gekennzeichnet, dass** zumindest einige der Druckbehälter (205a-205c) selektiv koppelbar sind, um die Übertragung von Restdruckenergie von einem Druckbehälter (205a-205c) zu ermöglichen, nachdem dieser verwendet wurde, um Arbeit zu verrichten; und die Übertragung von Restdruckenergie zu einem anderen Druckbehälter (205a-205c), um beim Verrichten von Arbeit zu unterstützen.

2. Das Solarkraftsystem (100, 200) nach Anspruch 1, wobei die Restdruckenergie thermische Energie umfasst.

3. Das Solarkraftsystem (100, 200) nach Anspruch 2, umfassend eine Vielzahl von thermischen Reservoiren (305), wobei die Druckbehälter (205a-205c) thermisch koppelbar zu jedem der Vielzahl von thermischen Reservoiren (305) sind, optional oder vorzugsweise wobei die Druckbehälter (205a-205c) thermisch koppelbar zu einem oder mehreren thermischen Reservoiren (305) sind, um die selektive Übertragung von thermischer Energie von dem Druckbehälter (205a-205c) zu dem thermischen Reservoir und von dem thermischen Reservoir zu den Druckbehältern (205a-205c) zu ermöglichen.

4. Das Solarkraftsystem (100, 200) nach Anspruch 2, wobei die Druckbehälter (205a-205c) thermisch koppelbar sind, um die selektive Übertragung von thermischer Energie von einem Druckbehälter (205a-205c) zu einem anderen Druckbehälter (205a-205c) zu ermöglichen.

5. Das Solarkraftsystem (100, 200) nach Anspruch 1, wobei die Restdruckenergie Lageenergie umfasst.

6. Das Solarkraftsystem (100, 200) nach Anspruch 5, wobei die Druckbehälter (205a-205c) Druckbehälter umfassen, die hydraulisch koppelbar sind, um die selektive Übertragung von Druck von einem Druckbehälter (205a-205c) zu einem anderen Druckbehälter (205a-205c) zu ermöglichen, optional oder vorzugsweise wobei der Druck zumindest teilweise aus thermischer Ausdehnung und/oder zumindest teilweise entsprechend einer Last von dem mechanischen Arbeitselement (115) erzeugt wird.

7. Das Solarkraftsystem (100, 200) nach Anspruch 1, wobei das Arbeitsfluid Silikonfluid umfasst.

8. Das Solarkraftsystem (100, 200) nach Anspruch 1, wobei das mechanische Arbeitselement (115) mit der Vielzahl von Druckbehältern (205a-205c) gekoppelt ist, um Arbeit aus der Ausdehnung des Arbeitsfluids in den Druckbehältern (205a-205c) in einer vorbestimmten Arbeitssequenz zu verrichten.

9. Das Solarkraftsystem (100, 200) nach Anspruch 8, wobei die Vielzahl von Druckbehältern (205a-205c) miteinander gekoppelt sind, um die Übertragung von Restenergie zwischen Druckbehältern (205a-205c) in einer vorbestimmten Übertragungssequenz zu ermöglichen, optional oder vorzugsweise wobei die Arbeitssequenz und die Übertragungssequenz parallel arbeiten oder zumindest teilweise durch das Öffnen und Schließen von Ventilen (210a-210e) definiert sind.

10. Das Solarkraftsystem (100, 200) nach Anspruch 8, wobei die Druckbehälter (205a-205c) in einer kreisförmigen Anordnung angeordnet sind, wobei die Arbeitssequenz zumindest teilweise durch Rotation der Druckbehälter (205a-205c) definiert ist, optional oder vorzugsweise wobei ein oder mehrere thermische Reservoiren (305) zwischen Druckbehältern (205a-205c) vorgesehen sind, um thermische Übertragung zwischen Druckbehältern (205a-205c) zu ermöglichen,
wobei die Druckbehälter (205a-205c) relativ zu den thermischen Reservoiren (305) drehbar sind, um zu ermöglichen, dass die thermischen Reservoiren (305) Druckbehälter (205a-205c) selektiv entsprechend ihrer Rotationsposition koppeln.

11. Das Solarkraftsystem (100, 200) nach Anspruch 1, wobei erhitztes Arbeitsfluid in einem Druckbehältercontainer aufgenommen wird, der mindestens einen der Druckbehälter (205a-205c) umgibt, um dadurch den mindestens einen Druckbehälter zu erhitzen.

12. Das Solarkraftsystem (100, 200) nach Anspruch 11, wobei eine Position der Druckbehälter (205a-205c) relativ zu dem erhitzten Arbeitsfluid konfigurierbar ist, um zu ermöglichen, dass unterschiedliche Druckbehälter (205a-205c) durch das erhitzte Arbeitsfluid zu unterschiedlichen Zeitpunkten erhitzt werden.

13. Das Solarkraftsystem (100, 200) nach Anspruch 1, wobei der Solarkollektor (110) konfiguriert ist, Arbeitsfluid in einem ersten Druckbehälter (205a-205c) der Vielzahl von Druckbehältern (205a-205c) zu erhitzen, um zu bewirken, dass sich das Arbeitsfluid in dem ersten Druckbehälter (205a-205c) ausdehnt, und wobei erhitztes Arbeitsfluid aus dem ersten Druckbehälter (205a-205c) anschließend konfiguriert ist, Arbeitsfluid in einem zweiten Druckbehälter (205a-205c) zu erhitzen, um dadurch zu bewirken, dass sich das Arbeitsfluid in dem zweiten Druckbehälter (205a-205c) ausdehnt.

14. Das Solarkraftsystem (100, 200) nach Anspruch 1, wobei das System konfiguriert ist, das Arbeitsfluid um 20-60 °C zu erhitzen.

15. Ein Solarkraftverfahren, umfassend:

Empfangen von Arbeitsfluid in einer Vielzahl von Druckbehältern;
Erhitzen des Arbeitsfluids in mindestens einem der Druckbehälter (205a-205c) unter Verwendung eines Solarkollektors (110), um dadurch zu bewirken, dass sich das Arbeitsfluid in dem mindestens einen Druckbehälter (205a-205c) ausdehnt, ohne die Phase zu ändern; und
Verwenden der Ausdehnung des Arbeitsfluids in dem mindestens einen Druckbehälter (205a-205c), um Arbeit an einem mechanischen Arbeitselement (115), wie einem hydraulischen Motor, zu verrichten;
anschließendes Koppeln des mindestens einen Druckbehälters (205a-205c), um Restdruckenergie von einem Druckbehälter zu einem anderen Druckbehälter (205a-205c) zu übertragen, um das Verrichten von Arbeit durch den anderen Druckbehälter (205a-205c) unter Verwendung des mechanischen Arbeitselements (115) zu unterstützen.

**Revendications**

1.  Un système d'énergie solaire (100,200) comprenant :

    une pluralité de réservoirs sous pression (205a-205c) configurés pour recevoir le fluide de travail ;
    un collecteur solaire (110), configuré pour chauffer le fluide de travail dans au moins l'un des récipients sous pression (205a-205c) afin de provoquer une expansion du fluide de travail dans le récipient sous pression (205a-205c) sans changement de phase ; et
    un élément de travail mécanique (115), configuré pour effectuer un travail à partir de l'expansion du fluide de travail dans le récipient sous pression (205a-205c), **caractérisé par le fait qu'**au moins certains des récipients sous pression (205a-205c) sont sélectivement couplables pour permettre le transfert de l'énergie de pression résiduelle d'un récipient sous pression (205a-205c) après qu'il a été utilisé pour effectuer un travail ; et le transfert de l'énergie de pression résiduelle à un autre récipient sous pression (205a-205c) pour aider à l'exécution du travail.

2.  Le système d'énergie solaire (100,200) de la revendication 1, l'énergie de pression résiduelle comprenant l'énergie thermique.

3.  Le système d'énergie solaire (100,200) de la revendication 2, comprenant une pluralité de récipients thermiques (305), les récipients sous pression (205a-205c) étant thermiquement couplables à chacun de la pluralité de récipients thermiques (305), optionnellement ou de préférence les récipients sous pression (205a-205c) étant thermiquement couplés à un ou plusieurs récipients thermiques (305) pour permettre le transfert sélectif de l'énergie thermique du récipient sous pression (205a-205c) au récipient thermique, et du récipient thermique aux récipients sous pression (205a-205c).

4.  Le système d'énergie solaire (100,200) de la revendication 2, les récipients sous pression (205a-205c) étant thermiquement couplables pour permettre le transfert sélectif de l'énergie thermique d'un récipient sous pression (205a-205c) à un autre récipient sous pression (205a-205c).

5.  Le système d'énergie solaire (100,200) de la revendication 1, l'énergie de pression résiduelle comprenant l'énergie potentielle.

6.  Le système d'énergie solaire (100,200) de la revendication 5, les récipients sous pression (205a-205c) comprenant des récipients sous pression (205a-205c) qui sont hydrauliquement couplables pour permettre le transfert sélectif de la pression d'un récipient sous pression (205a-205c) à un autre récipient sous pression (205a-205c), optionnellement ou de préférence, la pression étant générée au moins en partie par la dilatation thermique et/ou au moins en partie en fonction de la charge de l'élément de travail mécanique (115).

7.  Le système d'énergie solaire (100,200) de la revendication 1, le fluide de travail comprenant un fluide de silicone.

8.  Le système d'énergie solaire (100,200) de la revendication 1, l'élément de travail mécanique (115) étant couplé à la pluralité de réservoirs sous pression (205a-205c) pour effectuer un travail à partir de l'expansion du fluide de travail dans les réservoirs sous pression (205a-205c) dans une séquence de travail prédéfinie.

9.  Le système d'énergie solaire (100,200) de la revendication 8, la pluralité de réservoirs sous pression (205a-205c) sont couplés les uns aux autres pour permettre le transfert d'énergie résiduelle entre les réservoirs sous pression (205a-205c) dans une séquence de transfert prédéfinie, optionnellement ou de préférence, la séquence de travail et la séquence de transfert fonctionnant en parallèle ou étant définies au moins en partie par l'ouverture et la fermeture des vannes (210a-210e).

10. Le système d'énergie solaire (100,200) de la revendication 8, les réservoirs sous pression (205a-205c) étant disposés de façon circulaire, la séquence de travail étant au moins partiellement définie par la rotation des réservoirs sous pression (205a-205c), optionnellement ou de préférence, un ou plusieurs réservoirs thermiques (305) étant fournis entre les réservoirs sous pression (205a-205c) pour permettre le transfert thermique entre les réservoirs sous pression (205a-205c), les réservoirs sous pression (205a-205c) étant rotatifs par rapport aux réservoirs thermiques (305) pour permettre aux réservoirs thermiques (305) de coupler sélectivement les réservoirs sous pression (205a-205c) en fonction de leur position de rotation.

11. Le système d'énergie solaire (100,200) de la revendication 1, le fluide de travail chauffé étant reçu dans un récipient sous pression, qui entoure au moins un des récipients sous pression (205a-205c), pour chauffer ainsi au moins un récipient sous pression.

12. Le système d'énergie solaire (100,200) de la revendication 11, une position des réservoirs sous pression (205a-205c) étant configurable par rapport au fluide de travail chauffé pour permettre à différents réservoirs sous pression (205a-205c) d'être chauffés par le fluide de travail chauffé à différents moments.

13. Le système d'énergie solaire (100,200) de la revendication 1, le collecteur solaire (110) étant configuré pour chauffer le fluide de travail dans un premier récipient sous pression (205a-205c) de la pluralité de récipients sous pression (205a-205c), pour provoquer l'expansion du fluide de travail dans le premier récipient sous pression (205a-205c), et le fluide de travail chauffé du premier récipient sous pression (205a-205c) étant ensuite configuré pour chauffer le fluide de travail dans un deuxième récipient sous pression (205a-205c) pour provoquer ainsi l'expansion du fluide de travail dans le deuxième récipient sous pression (205a-205c).

14. Le système d'énergie solaire (100,200) de la revendication 1, le système étant configuré pour chauffer le fluide de travail de 20 à 60°C.

15. Méthode de production d'énergie solaire comprenant :

la réception du fluide de travail dans une pluralité de récipients sous pression ;
le réchauffement du fluide de travail dans au moins un des récipients sous pression (205a-205c) à l'aide d'un collecteur solaire (110), afin que le fluide de travail se dilate dans au moins un récipient sous pression (205a-205c) sans changer de phase ; et
l'utilisation de l'expansion du fluide de travail dans au moins un récipient sous pression (205a-205c) pour effectuer un travail sur un élément de travail mécanique (115), tel qu'un moteur hydraulique ;
le couplage ultérieur de l'au moins un récipient sous pression (205a-205c) pour transférer l'énergie de pression résiduelle d'un récipient sous pression à un autre récipient sous pression (205a-205c) afin d'aider l'autre récipient sous pression (205a-205c) à effectuer un travail à l'aide de l'élément de travail mécanique (115).

Figure 1

120

Load

200

115     Hydraulic
Ram

205a    A   210a      205b    B   210b      205c    C   210c

Pressure Vessel
1     D    Pressure Vessel
2     E    Pressure Vessel
3

210d            210e

F   210f

## Figure 2

300

Pressure
Vessel    310

305         305         305

Thermal Reservoir
1     Thermal Reservoir
2   ...   Thermal Reservoir
N

## Figure 3

Figure 4

Figure 5

Figure 6

Figure 7

Figure 8

Figure 9

Figure 10

EP 4 214 415 B1

Figure 11

EP 4 214 415 B1

Figure 12

Figure 13

Figure 14

Figure 15

1605a    1605b        1605a    1605b        1605a    1605b

Pressure Vessel
1

Pressure Vessel
2

Pressure Vessel
3

## Figure 16a

1605a                                    1605b

Pressure Vessel
1

Pressure Vessel
2

Pressure Vessel
3

## Figure 16b

1605a                                    1605b

Pressure Vessel 1
filled with cold
working fluid

Waste Working Fluid '1'

Pressure Vessel
2

Pressure Vessel
3

## Figure 16c

1605a                    1605b

Pressure Vessel
1

Pressure Vessel
2

Waste Working Fluid '1'

Pressure Vessel
3

## Figure 16d

1605b          1605a

Waste Working Fluid '1'

Pressure Vessel
1

Pressure Vessel
2

Pressure Vessel
3

## Figure 16e

Figure 17

EP 4 214 415 B1

**EP 4 214 415 B1**

**Patent documents cited in the description**

- US 4441318 A